# EUROPEAN PATENT SPECIFICATION

(11) **EP 1 910 730 B1**
(45) Date of publication and mention of the grant of the patent: **14.04.2010**
(21) Application number: 06800363.1
(22) Date of filing: 26.07.2006
(51) Int. Cl.: F16L 37/34, F16L 37/413

(54) **COUPLING ASSEMBLY WITH OVERMOLD SEALING STRUCTURES AND METHOD OF FORMING THE SAME**
KUPPLUNGSANORDNUNG MIT ÜBERFORMUNGSVERSIEGELUNGSSTRUKTUREN UND VERFAHREN ZU DEREN FORMUNG
ASSEMBLAGE DE COUPLAGE AVEC DES STRUCTURES D ETANCHEITE SURMOULEES ET PROCEDE DE FORMATION DE CELUI-CI

(30) Priority: 26.07.2005 US 702547 P
(43) Date of publication of application: 16.04.2008
(73) Proprietor: COLDER PRODUCTS COMPANY, St. Paul MN 55114 (US)
(72) Inventor: WILHELM, Grant, Armin, Plymouth, MN 55447 (US)
(74) Representative: Rambelli, Paolo
(86) International application number: PCT/US2006/029053
(87) International publication number: WO 2007/014281

(56) References cited:
- EP-A2- 1 298 377
- WO-A-00/01976
- WO-A-96/21120
- GB-A- 1 212 777
- US-A- 5 639 064

## Description

### RELATED APPLICATION

This application is being filed as a PCT International Patent Application on 26 July 2006, in the name of Colder Products Company, a U.S. national corporation, applicant for the designation of all countries except the U.S., and Grant Armin Wilhelm, a U.S. citizen, applicant for the designation of the U.S. only, and claims priority to U.S. Application Serial No. 60/702,547, filed 26 July 2005.

### TECHNICAL FIELD

Embodiments of the present invention relate to fluid coupling assemblies and methods of making coupling assemblies. More particularly, embodiments of the present invention relate to fluid coupling assemblies with valve structures having overmold seals, and methods of forming the valve structures in the same.

### BACKGROUND

Quick disconnect coupling assemblies are commonly used in fluid transport applications. Coupling assemblies can include a male portion that is introduced into a female portion to create a fluid tight connection. Typically, connectors of such assemblies require proper dimensioning so that seal and/or assembled surfaces can be maintained to provide a no leak connector. These connectors can also employ twist-to-connect or quick connect/disconnect features having manually operated latches for connecting to other pieces of fluid dispensing equipment. Further, valve control parts and assemblies can be employed for controlling fluid flow. Examples of fluid coupling assemblies include those described in U.S. Patent Nos. 5,494,074 and 5,938,475.

WO 00/01973 describes a pipe coupling for connection to a pipe end of a pipe made of polymer material and intended preferably for tap water or heating installations. The pipe coupling includes an inner sleeve intended for insertion into the pipe end and for abutment with the inner surface of said pipe end. The coupling further includes an outer sleeve intended for abutment with the outer surface of said pipe end. The outer sleeve is provided with a slot-like opening and means for adjusting the width of said opening.

Connections and seals between different components of the coupling assemblies can be difficult and expensive to form and/or assemble. For example, in some connectors, o-rings are used to form seals between moving components of the connectors. Welding techniques, such as sonic- or spin-welding, are typically used to attach non-moving components of thermoplastic coupling assemblies.

For connectors that require tight manufacturing tolerances, specific dimensions, the sealing and/or assembled surfaces of the connector can be compromised due to a variety of factors, including variations in tolerances and shrinkage during injection molding processes. These variations can cause leaks and can make it necessary to go back and fine-tune the connector to specification requirements, which can be a costly process.

### SUMMARY

There is a need for improved coupler assemblies.

The subject of the invention is defined by the appended claims.

Embodiments of the present invention relate to fluid coupling assemblies and methods of making coupling assemblies. More particularly, embodiments of the present invention relate to fluid coupling assemblies with valve structures having overmold seals, and methods of forming the valve structures in the same.

According to one aspect, a coupler for a coupling assembly includes a housing defining an internal bore, and a sleeve positioned in the bore of the housing. The coupler also includes a first overmold seal formed to create a sealing engagement between the sleeve and the housing.

According to another aspect, a coupler for a coupling assembly includes a housing including a first end, a second end, and defining an internal bore, wherein the first end defines a recessed sealing surface, and a termination attached to the second end of the housing. The coupler also includes a valve positioned in the bore of the housing.

According to yet another aspect, a method of forming a coupler includes: molding a sleeve of the coupler, the sleeve defining an interior surface, an exterior surface, a first end, and a second end; and overmolding a first seal on the exterior surface of the sleeve to seal against a wall forming an internal bore in a housing of the coupler.

### BRIEF DESCRIPTION OF THE DRAWINGS

Like reference numbers generally indicate corresponding elements in the figures.
Figure 1 is a cross-sectional view of one embodiment of a coupling assembly showing one embodiment of a coupler body and a coupler insert.
Figure 2 is a perspective view of the coupler body of the coupling assembly of Figure 1.
Figure 3 is a partial sectional perspective view of the coupler body of Figure 2.
Figure 4 is an exploded perspective view of the coupler body of Figure 2.
Figure 5 is a side view of the coupler body of Figure 2.
Figure 6 is an end view of the coupler body of Figure 5.
Figure 7 is a side sectional view of the coupler body of Figure 6 taken along line 7-7.
Figure 8 is a perspective view of one embodiment of a coupler housing of the coupler body shown in Figure 4.
Figure 9 is a side view of the coupler housing of Figure 8.
Figure 10 is an end view of the coupler housing of Figure 8.
Figure 11 is a side sectional view of the coupler housing of Figure 10 taken along line 11-11.
Figure 12 is an enlarged view of a portion of the coupler housing of Figure 11.
Figure 13 is a top view of the coupler housing of Figure 8.
Figure 14 is an enlarged view of a portion of the coupler housing of Figure 13.
Figure 15 is a perspective view of one embodiment of a coupler adapter of the coupler body shown in Figure 4.
Figure 16 is a side view of the coupler adapter of Figure 15.
Figure 17 is a top view of the coupler adapter of Figure 15.
Figure 18 is an end view of the coupler adapter of Figure 15.
Figure 19 is a sectional side view of the coupler adapter of Figure 18 taken along line 19-19.
Figure 20 is a perspective view of one embodiment of a coupler sleeve of the coupler body shown in Figure 4 after a first shot mold.
Figure 21 is a side view of the coupler sleeve of Figure 20.
Figure 22 is an end view of the coupler sleeve of Figure 20.
Figure 23 is a sectional view of the coupler sleeve of Figure 22 taken along line 23-23.
Figure 24 is a perspective view of one embodiment of a coupler sleeve of the coupler body shown in Figure 4 after a second shot mold.
Figure 25 is an end view of the coupler sleeve of Figure 24.
Figure 26 is a sectional side view of the coupler sleeve of Figure 25 taken along line 26-26.
Figure 27 is an enlarged view of a portion of the coupler sleeve of Figure 26. Figure 28 is a perspective view of the coupler insert of the coupling assembly of Figure 1
Figure 29 is a partial sectional perspective view of the coupler insert of Figure 28.
Figure 30 is an exploded perspective view of the coupler insert of Figure 28. Figure 31 is a side view of the coupler insert of Figure 28.
Figure 32 is an end view of the coupler insert of Figure 28.
Figure 33 is a sectional side view of the coupler insert of Figure 32 taken along line 33-33.
Figure 34 is a perspective view of one embodiment of an insert housing of the coupler insert of Figure 30.
Figure 35 is a side view of the insert housing of Figure 34.
Figure 36 is a top view of the insert housing of Figure 34.
Figure 37 is an end view of the insert housing of Figure 34.
Figure 38 is a sectional side view of the insert housing of Figure 37 taken along line 38-38.
Figure 39 is an enlarged view of a portion of the insert housing of Figure 38. Figure 40 is a perspective view of one embodiment of an insert adapter of the coupler insert of Figure 30.
Figure 41 is a side view of the insert adapter of Figure 40.
Figure 42 is an end view of the insert adapter of Figure 40.
Figure 43 is a sectional side view of the insert adapter of Figure 42 taken along line 43-43.
Figure 44 is a perspective view of an insert valve member of the coupler insert of Figure 30 after a first shot mold.
Figure 45 is a side view of the insert valve of Figure 44.
Figure 46 is an end view of the insert valve of Figure 44.
Figure 47 is a sectional side view of the insert valve of Figure 46 taken along line 47-47.
Figure 48 is a perspective view of one embodiment of an insert valve of the coupler insert of Figure 30 after a second shot mold.
Figure 49 is an end view of the insert valve of Figure 48.
Figure 50 a sectional side view of the insert valve of Figure 49 taken along line 50-50.
Figure 51 is a schematic view of one embodiment for a two-shot molding method for making the coupler sleeve of Figures 20-27 including a schematic of tooling for the same.
Figure 52 is a schematic view of one embodiment of an overmold joint between a housing and an adapter of a body of a coupling assembly.
Figure 53 is a schematic view of second embodiment of an overmold joint between a housing and an adapter of a body of a coupling assembly.
Figure 54 is a schematic view of third embodiment of overmold an overmold joint between a housing and an adapter of a body of a coupling assembly.
Figure 55 is a schematic view of one embodiment for an insert molding method for making an overmold joint including a schematic of tooling for the same.

### DETAILED DESCRIPTION

Embodiments of the present invention relate to fluid coupling assemblies and methods of making coupling assemblies. More particularly, embodiments of the present invention relate to fluid coupling assemblies with valve structures having overmold seals, and methods of forming the valve structures in the same.

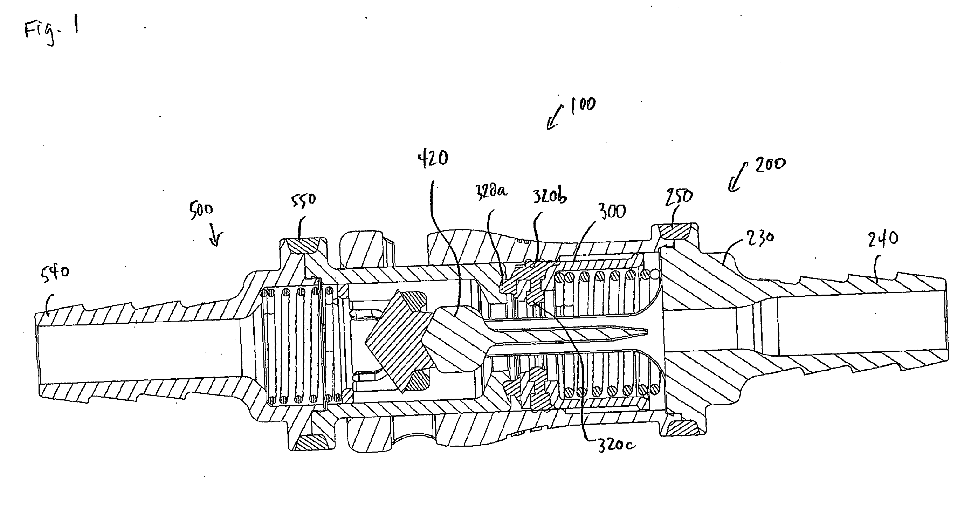

A coupling assembly 100 is shown in Figure 1. Assembly 100 generally includes a coupler body 200 and a coupler insert 500. Insert 500 is introduced into body 200 as shown in Figure 1 to form a fluid tight connection therebetween.

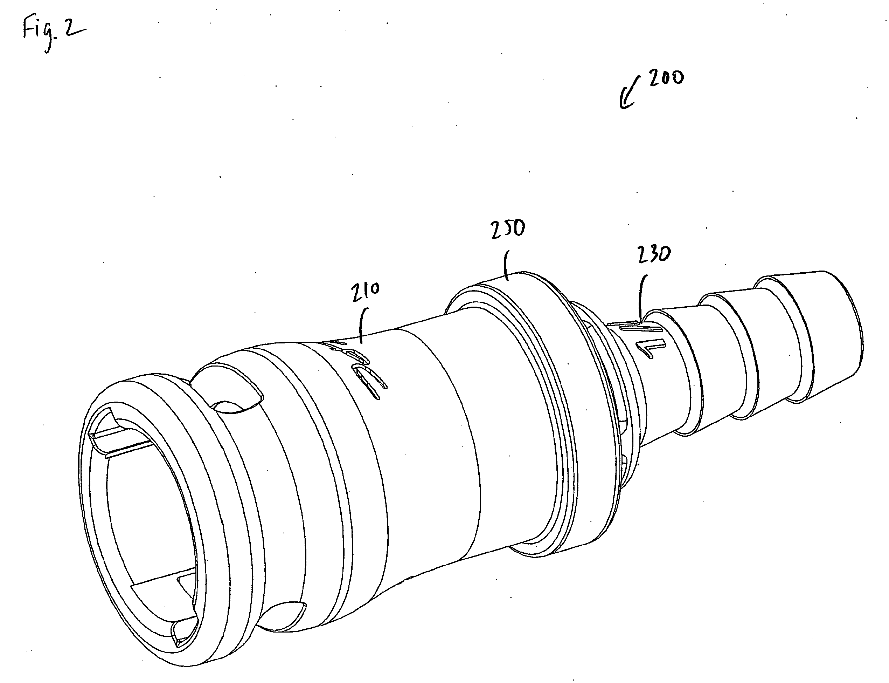

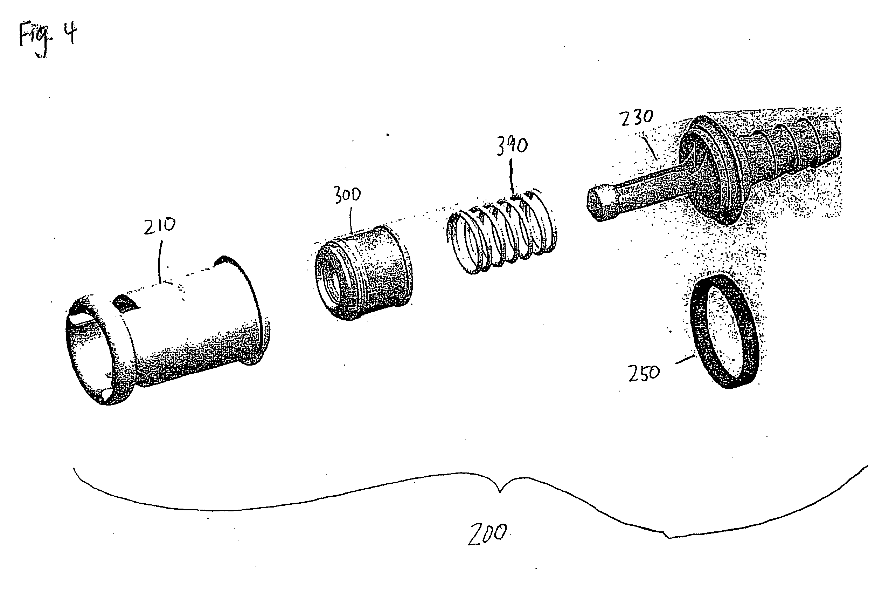

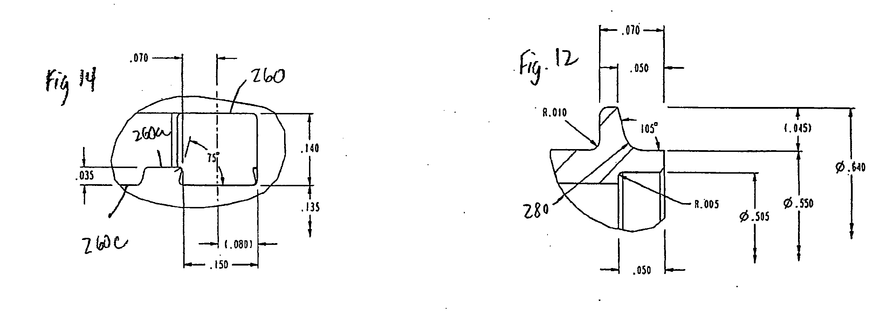

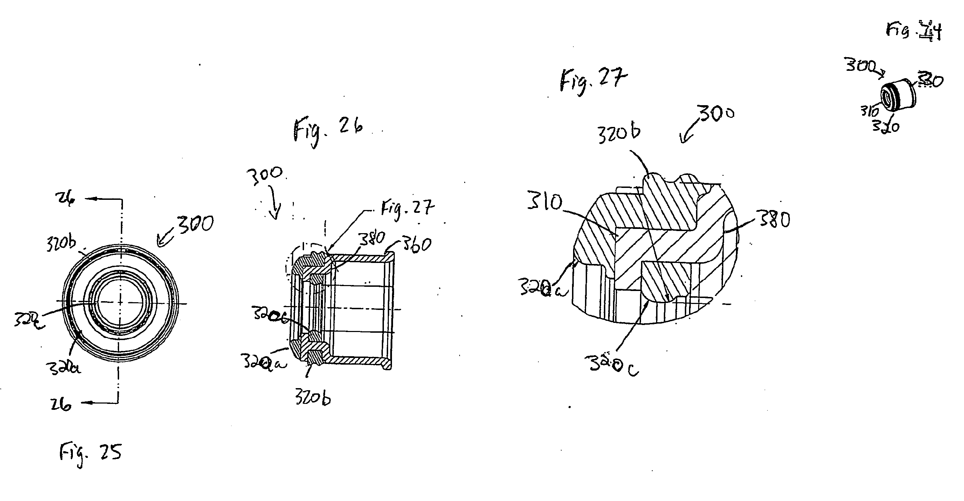

Referring now to Figures 2-27, body 200 is shown in more detail. Body 200 includes a housing 210, an adapter 230, a sleeve 300, and a biasing member 390. Also included is an overmold joint 250 used to attach housing 210 to adapter 230, as described further below.

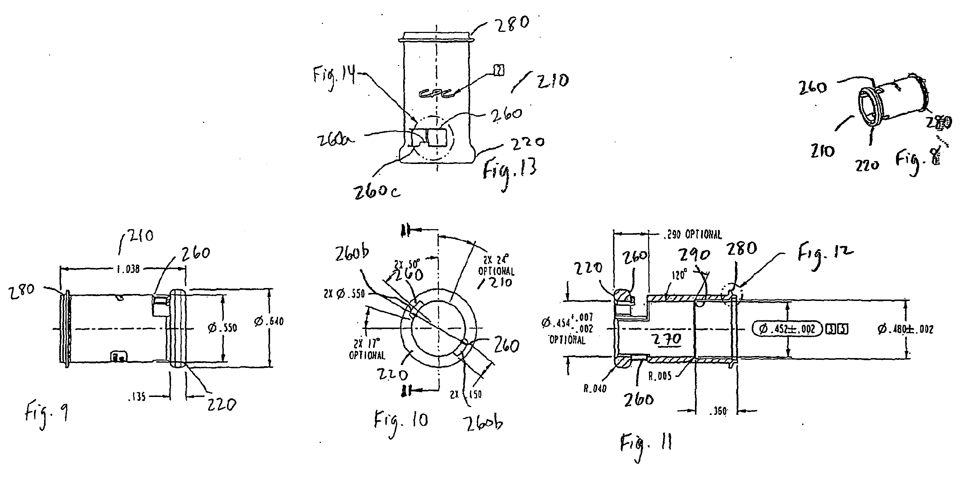

Referring to Figures 8-14, housing 210 includes a first end 220, a housing connecting flange 280, and defines a housing flow passage 270 through which fluid can flow, as described below. Housing 210 also defines an inner shoulder 290 for engaging sleeve 300.

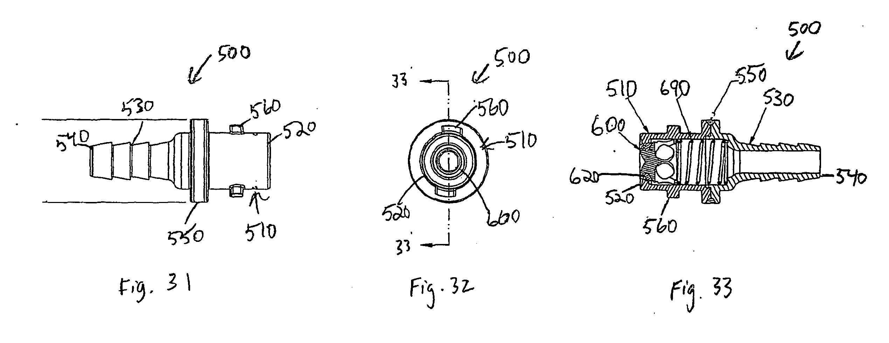

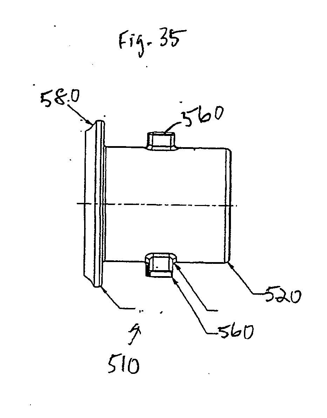

Housing 210 also includes lock apertures 260, a notch 260a, a clearance space 260b, and a seat 260c. These structures together form a locking structure to attach body 200 to insert 500 (see locking lugs 560 of insert 500 shown in Figures 31-39), as described below. This locking structure is commonly referred to as a twist-to-connect configuration including an over-centering latch. In other embodiments, other structures can be used to connect insert 500 to body 200 such as, for example, a latch assembly including one or more camming surfaces, or a locking structure such as that described in U.S. Patent Application Serial No. 10/612,475.

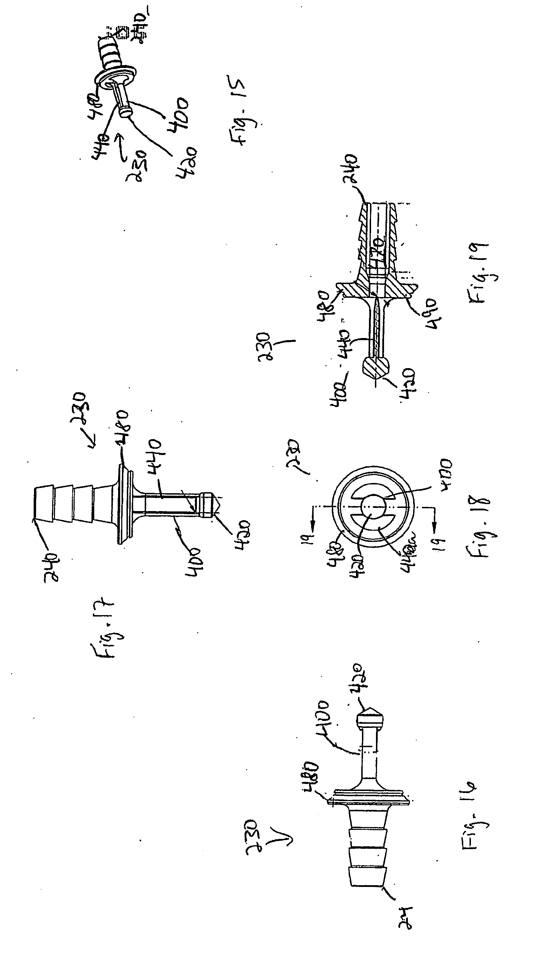

Referring now to Figures 15-19, adapter 230 of body 200 includes a valve stem 400 with a stem head portion 420 that engages sleeve 300 as described below, and a flow opening 440 with flow apertures 440a. In an alternative embodiment, valve stem 400 can be configured to be hollow in a manner similar to a hollow needle arrangement.

Adapter 230 further defines a flow passage 470 in fluid communication with flow opening 440. A connecting flange 480 is attached to housing 210 by overmold joint 250, as described below. A biasing surface 490 is configured to engage biasing member 390.

Adapter 230 also includes a second end 240 that can be, for example, used to connect body 200 to a fluid transport system, such as a fluid line (not shown). For example, as shown, second end 240 includes a barbed surface structure that allows adapter 230 to be connected with a fluid line in an interference fit arrangement. Other types of connections can also be used, such as threaded arrangement.

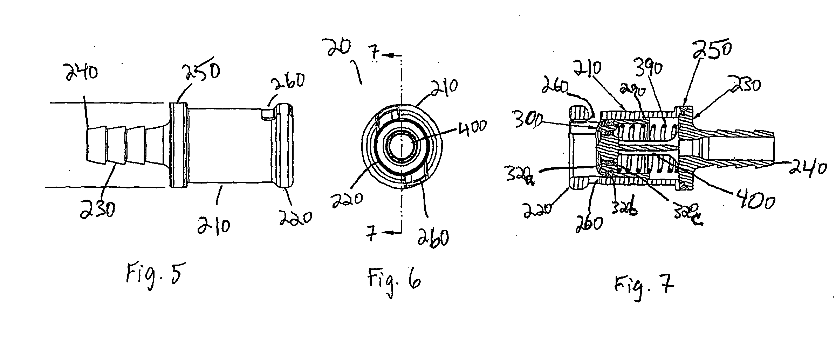

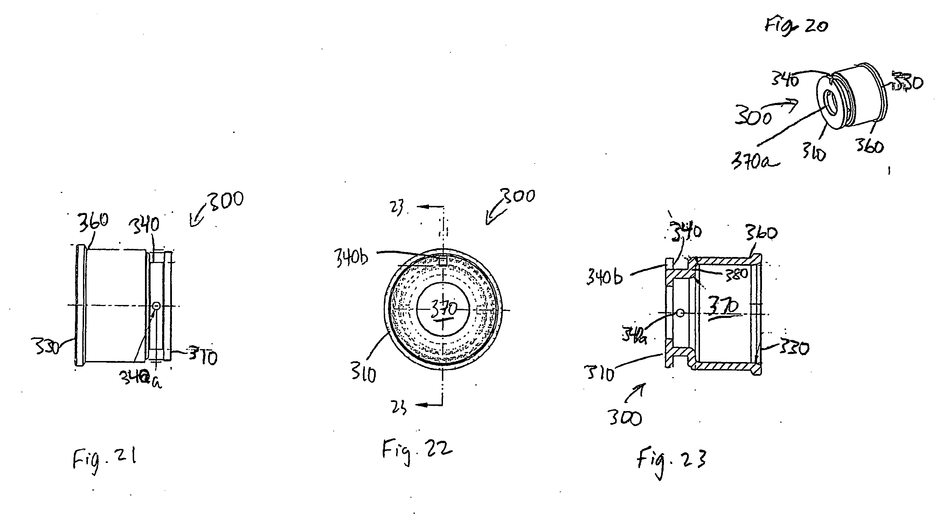

Referring now to Figures 20-23, sleeve 300 is shown, including a sleeve first end 310 and a sleeve second end 330. An inner sleeve shoulder 380 is configured to engage biasing member 390. A sleeve shoulder 360 formed at sleeve second end 330 engages inner shoulder 290 of housing 210 when sleeve 300 is biased in a forward position towards first end 220 of housing 210. See Figure 7. A sleeve flow passage 370 and flow opening 370a are also formed by sleeve 300.

Sleeve 300 also includes a recessed annular surface 340, a mold flow aperture 340a, and a mold flow opening 340b. As described below, these structures are used to form overmold seals on sleeve 300. The overmold seals create sealing structures between sleeve 300 and housing 210, and between sleeve 300 and adapter 230.

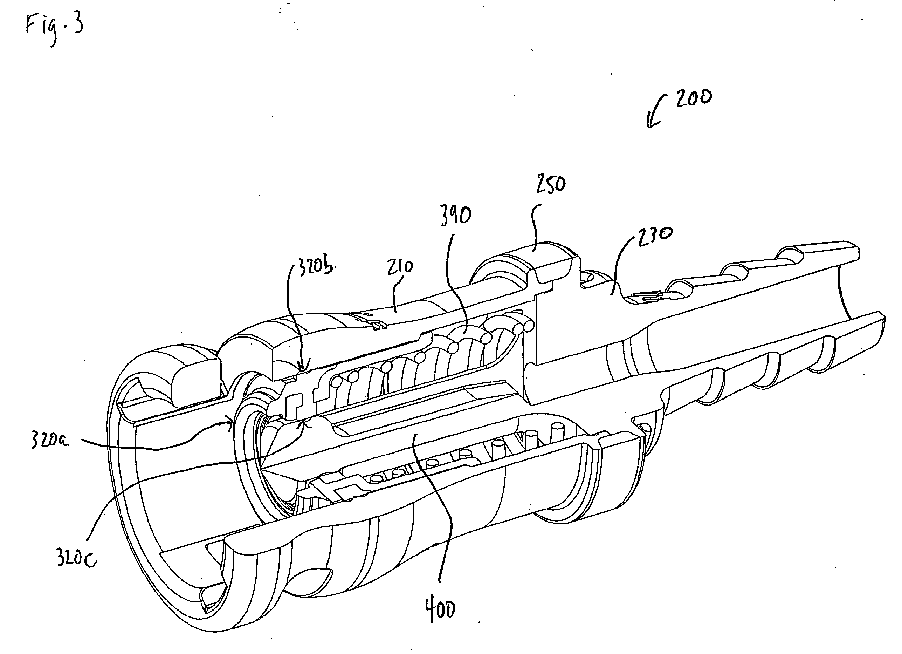

Referring now to Figures 1, 3, 7 and 24-27, sleeve 300 is shown with a first overmold seal 320a, a second overmold seal 320b, and a third overmold seal 320c. First overmold seal 320a is positioned to form a seal between sleeve 300 and insert housing 510 of insert 500. See Figures 1 and 7. Second overmold seal 320b is positioned to form a seal between sleeve 300 and housing 210 of body 200. Third overmold seal 320c, formed adjacent to flow opening 370a, is positioned to form a seal between sleeve 300 and stem head portion 420 of adapter 230 when sleeve 300 is biased in the forward position. See Figures 3 and 7.

In the example shown, sleeve 300, including overmold seals 320a, 320b, and 320c, is formed using the two-shot molding process described below. In other embodiments, overmold seals 320a, 320b, and 320c can be formed using other methods.

Referring to Figures 3, 4, and 7, biasing member 390 is positioned between biasing surface 490 of adapter 230 and sleeve 300 to bias sleeve 300 towards first end 220 of housing 210 of body 200 in the forward position. Axial force can be applied to sleeve 300 against biasing member 390 to move sleeve 300 towards second end 240 of adapter 230 when insert 500 is introduced into body 200, as described below. In one example, biasing member 390 is a metal spring, although other materials and structures can be used.

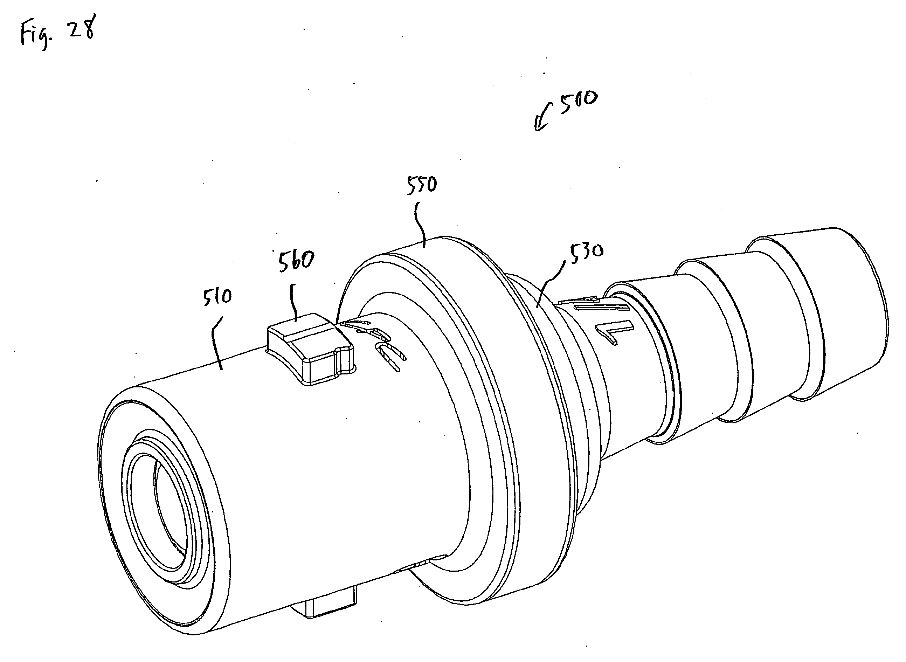

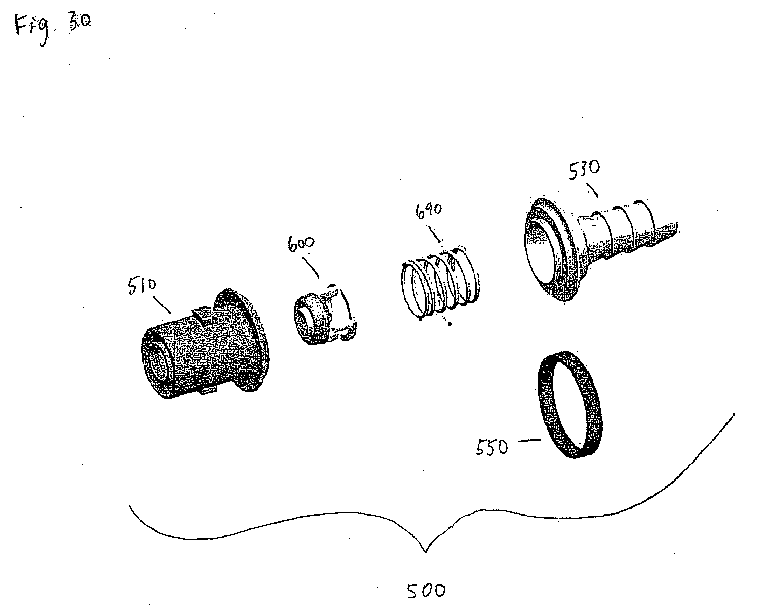

Referring now to Figures 28-50, insert 500 is shown. Insert 500 generally includes an insert housing 510, an insert valve 600, a biasing member 690, and an insert termination 530. Also included is an insert overmold joint 550 used to attach housing 510 to termination 530, as described further below.

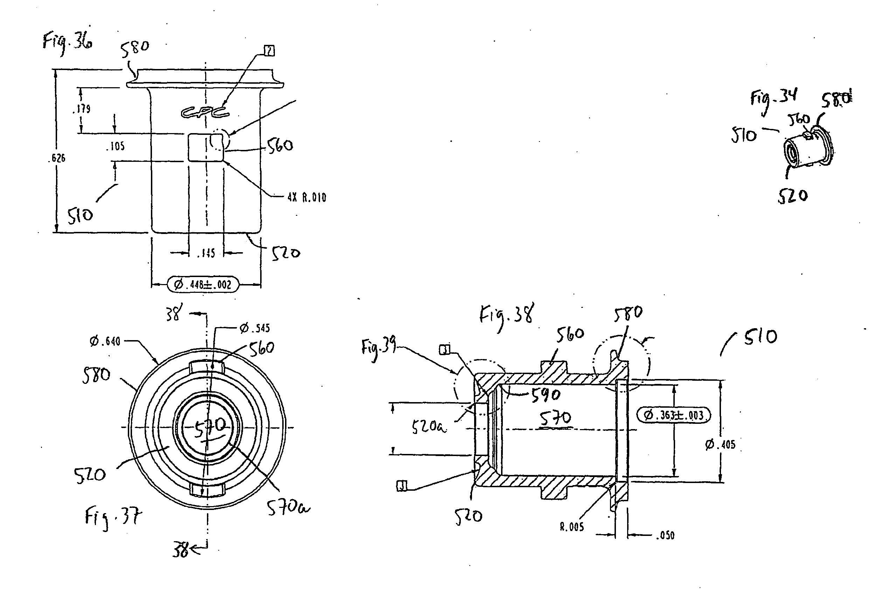

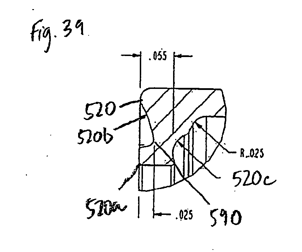

Referring now to Figures 34-39, housing 510 defines an aperture 570a, an insert flow passage 570, and a housing connecting flange 580 configured to be attached to termination 530 by overmold joint 550, as described below. Housing 510 includes an inner shoulder 590 configured to engage overmold seal 620 formed on valve shoulder 640 of insert valve 600. A recessed surface 520c of housing 510 (see Figure 39) functions to structurally support seal 620 as pressure is applied to insert 500 while disconnected from body 200. In addition, housing 510 includes a first end 520 with a recessed face 520a and an annular recessed surface 520b. Recessing of face 520a and surface 520b function to protect these surfaces from damage when insert 500 is disconnected from body 200.

First end 520 is sized to engage and push sleeve 300 against biasing member 390 of body 200 towards biasing surface 490 of adapter 230 when insert 500 is connected to body 200. In addition, recessed surface 520b is configured to engage first overmold seal 320a of sleeve 300 of body 200 to form a seal between housing 510 and sleeve 300 when insert 500 is connected to body 200, as described below. See Figures 1 and 7.

Housing 510 also includes locking lugs 560. Lugs 560 are sized to fit through clearance space 260b and ride along lock apertures 260 of housing 210 of body 200. As insert 500 is rotated relative to body 200, lugs 560 ride in lock apertures 260 until each lug 560 clears each notch 260a and is seated in seat 260c of housing 210 to connect insert 500 to body 200.

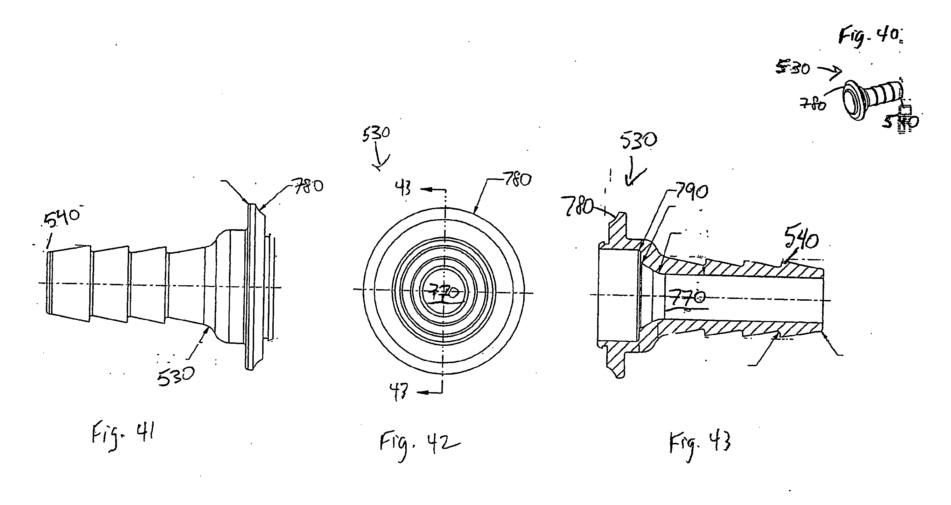

Referring now to Figures 40-43, termination 530 includes a second end 540 configured to be connected to a fluid transport system, such as a fluid line (not shown). Termination 530 defines a flow passage 770, and a connecting flange 780 is configured to be attached to housing connecting flange 580 by overmold joint 550, as described below. A biasing surface 790 is positioned to engage biasing member 690. See Figure 33.

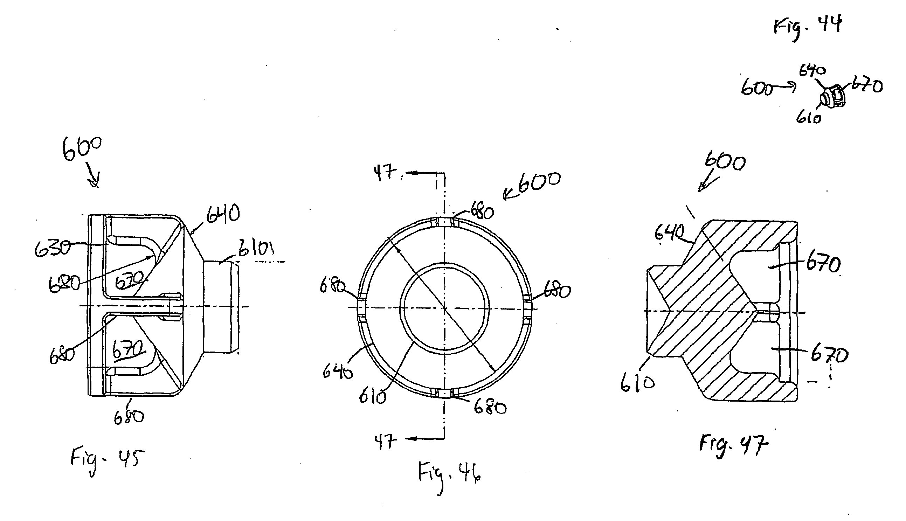

Referring now to Figures 44-47, valve 600 includes a valve head 610 that is positioned to extend adjacent to aperture 570a of housing 510. Valve 600 includes a valve base member 630 and a valve support portions 680, with valve flow apertures 670 formed therebetween. Valve 600 also includes valve shoulder 640.

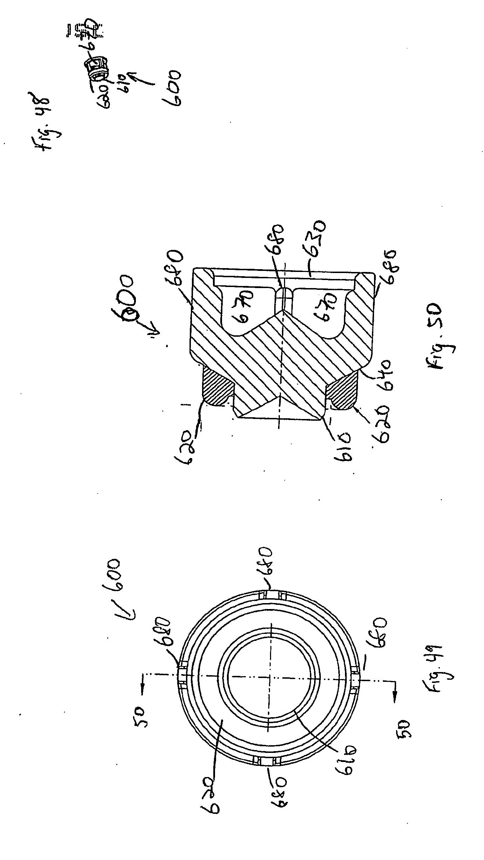

Referring to Figures 48-50, an overmold seal 620 is formed on shoulder 640. Overmold seal 620 forms a seal between valve 600 and inner shoulder 590 of housing 510 when valve 600 is biased in a forward position towards first end 520 of housing 510 by biasing member 690. In the example shown, overmold seal 620 is formed using the two-shot molding process described below. Other methods of forming can also be used.

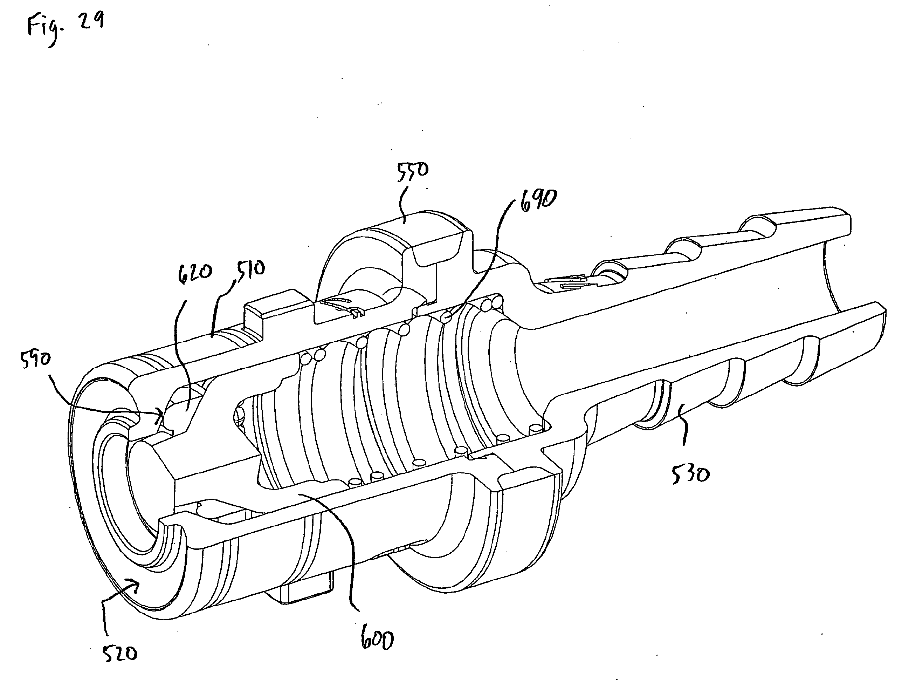

Referring to Figures 29, 30, and 33, biasing member 690 is positioned between biasing surface 790 of termination 530 and valve 600 to bias valve 600 towards first end 520 of housing 510 of insert 500. In one example, biasing member 690 is a metal spring, although other materials and structures can be used.

Referring again to Figure 1, a connection between body 200 and insert 500 is created by introducing insert housing 510 of insert 500 into housing 210 of body 200. In the fully connected state as shown in Figure 1, recessed face 520a of first end 520 of insert housing 510 engages overmold seal 320a of sleeve 300 to form a seal therebetween. In addition, sleeve 300 is pushed by insert housing 510 backwards against biasing member 390 of body 200 so that the seal formed by third overmold seal 320c of sleeve 300 with stem head portion 420 of adapter 230 is broken, thereby providing fluid communication through body 200 from flow opening 370a, through sleeve flow passage 370, through flow apertures 440a, and through flow passage 470 to second end 240 of adapter 230. In addition, in the fully connected state, stem head 420 of adapter 230 of body 200 pushes insert valve 600 backward against biasing member 690 of insert 500 so that the seal between overmold seal 620 and inner shoulder 590 of housing 510 is broken, thereby providing fluid communication through valve flow apertures 670 to insert flow passage 570, and through flow passage 770 to second end 540 of termination 530. In this manner, a fluid-tight channel is formed from second end 240 of body 200 to second end 540 of insert 500.

In addition and as noted above, when insert 500 is connected to body 200, locking lugs 560 fit through clearance space 260b and ride in lock apertures 260 of housing 210 of body 200. As insert 500 is rotated relative to body 200, lugs 560 ride in lock apertures 260 until each locking lug 560 clears a respective notch 260a and is seated in seat 260c of housing 210 to connect insert 500 to body 200. To remove insert 500 from body 200, engagement between lug 560 and seat 260c of housing 210 is broken by applying a slight axial force to push insert 500 and body 200 together and rotating insert 500 relative to body 200 in an opposite direction so that lugs 560 are unseated from seat 260c, clear notch 260a, and reach clearance space 260b to allow insert 500 to be removed from body 200.

Because there is only a small volume defined between body 200 and insert 500 when connected, there is little "spillage" released when the insert 500 is disconnected from the body 200. In addition, there is only a small volume of air or "inclusion" introduced into the system when the body 200 and insert 500 are connected.

In the example shown, body 200 and insert 500 of coupling assembly 100 are sized to form a 1/8 inch, 1/4 inch, 3/8 inch, or 1/2 inch size connection. Other sizes for assembly 100 can be used.

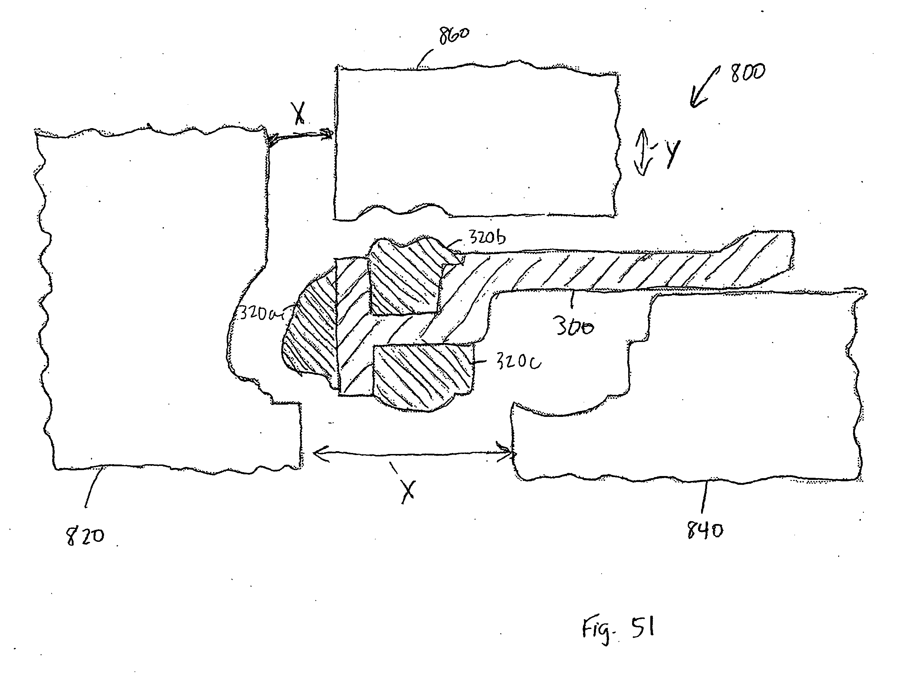

Referring now to Figure 51, an example system 800 and method for forming sleeve 300 and overmold seals 320a, 320b, and 320c on sleeve 300 are shown. System 800 includes cores 820, 840 and cam 860 that are used to form sleeve 300 and overmold seals 320a, 320b, and 320c using a two-shot molding process. Generally, a two-shot molding process uses two injection units that inject first and second molding materials during a molding processes. The resulting process enables the first and second materials to be mechanically bonded.

As shown in Figure 51, cores 820, 840 move in a direction X, and cam 860 moves in a direction Y to form a cavity. Initially, sleeve 300 is formed during a first shot of the molding process. Next, seals 320a, 320b, and 320c are formed during a second shot of the molding process. For example, material can be introduced through mold flow aperture 340a and opening 340b of sleeve 300 to form seals 320a, 320b, and 320c.

There are advantages associated with using the two-shot molding process to form sleeve 300. For example, sleeve 300 including seals 320a, 320b, and 320c can be formed in a single process, thereby increasing efficiency. In addition, seals 320a, 320b, and 320c can replace the typical o-rings used to form seals between different components of connectors in prior coupling assemblies, thereby reducing the number of components and manufacturing time for the assemblies and increasing reliability for the sealing surfaces. In addition, the molding process can result in the formation of a chemical bond between sleeve 300 and seals 320a; 320b, and 320c, thereby increasing structural integrity.

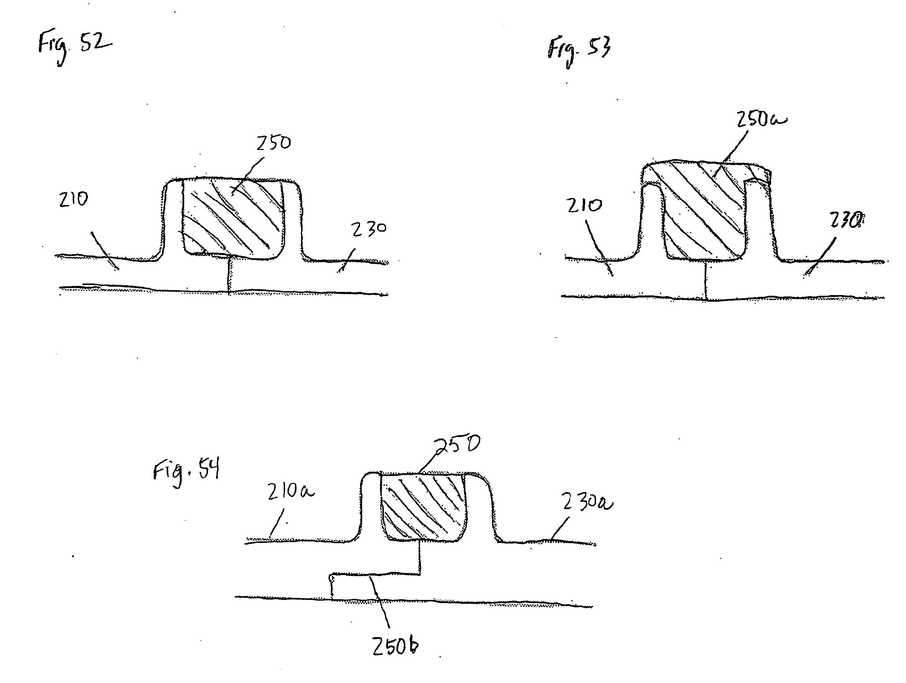

Referring now to Figures 52-54, example configurations of overmold joint 250 used to attach housing 210 to adapter 230 of body 200 are shown. In Figure 52, housing 210 and adapter 230 abut, and overmold joint 250 is formed flush therebetween to attach housing 210 to adapter 230. In the alternative shown in Figure 53, overmold joint 250a is formed to extend beyond the cavity formed between housing 210 and adapter 230. This configuration can, for example, provide additional joint strength and improved aesthetics. In the alternative in Figure 54, housing 210a and adapter 230a include a mating structure 250b. The mating structure 250b allows adapter 230a to partially support housing 210a during formation of overmold joint 250.

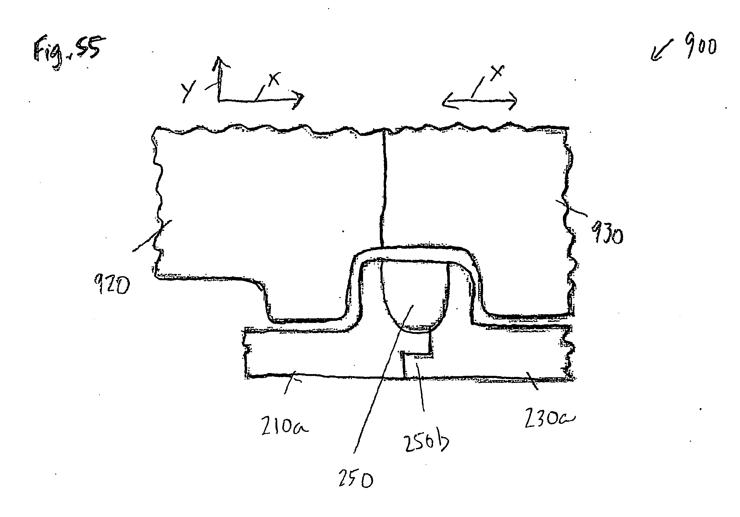

Referring now to Figure 55, an example system 900 and method for forming overmold joint 250 are shown. Generally, system 900 utilizes insert molding, in which a solid preform is placed in the mold, and a polymer is shot around the preform. The preform and polymer are welded during the molding process. In Figure 55, a core 930 moves in direction X, and a cam 920 moves in both directions X and Y to form a cavity between housing 210a and adapter 230a. Once in place, a polymeric material is injected to form overmold joint 250. Overmold joint 250 is welded to housing 210a and adapter 230a during the injection molding process.

In the examples shown, insert valve 600 and overmold seal 620 on valve shoulder 640 are formed using a two-shot molding process similar to that described above for overmold seals 320a, 320b, and 320c. In addition, overmold joint 550 used to attach housing 510 to termination 530 of insert 500 can be formed in a similar manner to that described above with respect to overmold joint 250. In some embodiments, the process of creating overmold joint 550 can be integrated with molding of one or more other components.

In the illustrated embodiment, adapter 230 and termination 530 are configured so that an outer surface of each component is identical so that the same tooling can be used to mold both components. This can reduce costs for the tooling used to mold these components.

In the examples shown, most components of body 200 and insert 500 are molded using a thermoplastic. For example, housing 210, sleeve 300, and adapter 230 of body 200 and insert housing 510, valve 600, and termination 530 of insert 500 can be molded from polypropylene. Other types of plastics, such as Acrylonitrile-Butadiene-Styrene ("ABS"), acetal, polycarbonate, polysulfone, and polyethylene, can also be used. Advantageous of such materials include one or more of the following: chemical resistance and/or compatibility; decreased cost; increased strength and dimensional stability; and compatibility with most sterilization methods, including Gamma, e-beam, and ethylene oxide sterilization.

In the examples shown, the overmold portions of assembly 100, such as overmold seals 320a, 320b, 320c, and 620, and overmold joints 250 and 550, are molded using a thermoplastic. In some embodiments, the thermoplastic is a thermoplastic elastomer ("TPE") or a thermoplastic vulcanizate ("TPV"). In one example, TPV is formed using a resin sold under the trademark SANTOPRENE™ by Advanced Elastomer Systems, LP of Akron, Ohio. Other materials, such as VERSALLOY® manufactured by GLS Corporation of McHenry, Illinois, or TEKBOND® manufactured by Teknor Apex Company of Pawtucket, Rhode Island, can also be used.

The above specification provides a complete description of the composition, manufacture and use of the improved coupling assemblies in accordance with the principles of the present inventions. The present inventions is not limited to the example embodiments described herein, since many embodiments of the invention can be made without departing from the scope of the invention, as defined by the appended claims.

## Claims

1. A coupler (200) for a coupling assembly (100), the coupler (200) comprising:
a housing (210) defining an internal bore (270);
a sleeve (300) positioned in the internal bore of the housing (210);
a first overmold seal (320b) formed to create a sealing engagement between the sleeve (300) and the housing (210); and
a second overmold seal (320c) on the interior surface of the sleeve (300) to seal against a stem (400) of the coupler (200), wherein the first overmold seal (320b) and the second overmold seal (320c) are formed from molding material during a single shot of a molding process.

2. The coupler (200) of claim 1, further comprising:
a third overmold seal (320a) formed to create a sealing engagement with a surface of a second mating coupler (500).

3. The coupler (200)of claim 2, wherein the first, second, and third overmold seals (320b, 320c, 320a) are formed using a single shot process.

4. The coupler (200) of claim 3, wherein the sleeve (300) is formed in a first shot of a two shot molding process, and wherein the first, second, and third overmold seals (320b, 320c, 320a) are formed on the sleeve (300) in a second shot of the two shot process.

5. The coupler (200) of claim 1, further comprising an adapter (230), wherein the adapter (230) is coupled to the housing (210) by an overmold joint (250).

6. The coupler (200) of claim 1, wherein the coupling assembly further includes a second mating coupler (500) comprising:
a housing (510) including a first end (520), a second end, and defining an internal bore (570), wherein the first end (520) defines a recessed sealing surface (520b);
a termination (530) attached to the second end of the housing (510); and
a valve (600) positioned in the internal bore (570) of the housing (510).

7. The coupler (200) of claim 9 6, further comprising an overmold joint (550) formed to couple the housing (510) and the termination (530).

8. A method of forming a coupler (200), the method comprising:
molding a sleeve (300) of the coupler (200), the sleeve (300) defining an interior surface, an exterior surface, a first end (310), and a second end (320);
overmolding a first seal (320b) on the exterior surface of the sleeve to seal against a wall forming an internal bore (270) in a housing (210) of the coupler (200); and
overmolding a second seal (320c) on the interior surface of the sleeve (300) to seal against a stem (400) of the coupler (200), wherein the first seal (320b) and the second seal (320c) are formed from molding material during a single shot of the molding process.

9. The method of claim 8, further comprising overmolding a third seal (320a) on the first end (310) of the sleeve (300) to seal against a surface of a second mating coupler (500).

10. The method of claim 9, further comprising overmolding the first, second, and third seals (320b, 320c, 320a) on the sleeve (300) using a single shot process.

11. The method of claim 9, further comprising:
forming the sleeve (300) in a first shot of a two shot process; and
overmolding the first, second, and third seals (320b, 320c, 320a) in a second shot of the two shot process.

12. The method of claim 8, further comprising:
placing the sleeve (300) in the internal bore (270) of the housing (210);
coupling an adapter (230) to the housing (210); and
overmolding a joint (250) between the housing (210) and the adapter (230).

13. The method of claim 12, further comprising positioning a spring (390) within the housing (210) between the sleeve (300) and the adapter (230) to force the sleeve (300) away from the adapter (230).

14. The method of claim 13, further comprising allowing the first seal (320b) of the sleeve (300) to form a seal against the wall of the internal bore (270) in the housing (210) as the sleeve (300) is moved axially within the housing (210).

## Patentansprüche

1. Kuppler (200) für eine Kupplungsanordnung (100), wobei der Kuppler (200) Folgendes umfasst:
ein Gehäuse (210), das eine innere Bohrung (270) definiert;
eine Hülse (300), die in der inneren Bohrung des Gehäuses (210) positioniert ist;
eine erste Überformdichtung (320b), die ausgebildet ist, um einen abdichtenden Eingriff zwischen der Hülse (300) und dem Gehäuse (210) zu erzeugen; und
eine zweite Überformdichtung (320c) an der Innenfläche der Hülse (300) zum Abdichten gegen einen Schaft (400) des Kupplers (200), wobei die erste Überformdichtung (320b) und die zweite Überformdichtung (320c) während eines Einstufenspritzvorgangs eines Formgebungsverfahrens aus Formmaterial gebildet werden.

2. Kuppler (200) nach Anspruch 1, weiters umfassend:
eine dritte Überformdichtung (320a), die ausgebildet ist, um einen abdichtenden Eingriff mit einer Oberfläche eines zweiten Gegenkupplers (500) zu erzeugen.

3. Kuppler (200) nach Anspruch 2, wobei die erste, zweite und dritte Überformdichtung (320b, 320c, 320a) unter Anwendung eines Einstufenspritzverfahrens gebildet werden.

4. Kuppler (200) nach Anspruch 3, wobei die Hülse (300) in einem ersten Spritzvorgang eines Zweistufenspritzgussverfahrens gebildet wird und die erste, zweite und dritte Überformdichtung (320b, 320c, 320a) in einem zweiten Spritzvorgang des Zweistufenspritzverfahrens an der Hülse (300) gebildet werden.

5. Kuppler (200) nach Anspruch 1, welcher weiters einen Adapter (230) umfasst, wobei der Adapter (230) durch eine Überformverbindung (250) mit dem Gehäuse (210) verbunden ist.

6. Kuppler (200) nach Anspruch 1, wobei die Kupplungsanordnung weiters einen zweiten Gegenkuppler (500) einschließt, der Folgendes umfasst:
ein Gehäuse (510), das ein erstes Ende (520) und ein zweites Ende inkludiert und eine innere Bohrung (570) definiert, wobei das erste Ende (520) eine vertiefte Dichtungsfläche (520b) definiert;
einen Abschluss (530), der am zweiten Ende des Gehäuses (510) befestigt ist, und
ein Ventil (600), das in der inneren Bohrung (570) des Gehäuses (510) positioniert ist.

7. Kuppler (200) nach Anspruch 6, welcher weiters eine Überformverbindung (550) umfasst, die ausgebildet ist, um das Gehäuse (510) und den Abschluss (530) zu verbinden.

8. Verfahren zum Bilden eines Kupplers (200), wobei das Verfahren Folgendes umfasst:
das Formen einer Hülse (300) des Kupplers (200), wobei die Hülse (300) eine Innenfläche, eine Außenfläche, ein erstes Ende (310) und ein zweites Ende (320) definiert;
das Überformen einer ersten Dichtung (320b) an der Außenfläche der Hülse zum Abdichten gegen eine Wand, die in einem Gehäuse (210) des Kupplers (200) eine innere Bohrung (270) bildet; und
das Überformen einer zweiten Dichtung (320c) an der Innenfläche der Hülse (300) zum Abdichten gegen einen Schaft (400) des Kupplers (200), wobei die erste Dichtung (320b) und die zweite Dichtung (320c) während eines Einstufenspritzvorgangs des Formgebungsverfahrens aus Formmaterial gebildet werden.

9. Verfahren nach Anspruch 8, welches weiters das Überformen einer dritten Dichtung (320a) am ersten Ende (310) der Hülse (300) zum Abdichten gegen eine Oberfläche eines zweiten Gegenkupplers (500) umfasst.

10. Verfahren nach Anspruch 9, welches weiters das Überformen der ersten, zweiten und dritten Dichtung (320b, 320c, 320a) an der Hülse (300) unter Anwendung eines Einstufenspritzverfahrens umfasst.

11. Verfahren nach Anspruch 9, weiters umfassend:
das Bilden der Hülse (300) in einem ersten Spritzvorgang eines Zweistufenspritzverfahrens; und
das Überformen der ersten, zweiten und dritten Dichtung (320b, 320c, 320a) in einem zweiten Spritzvorgang des Zweistufenspritzverfahrens.

12. Verfahren nach Anspruch 8, weiters umfassend:
das Platzieren der Hülse (300) in der inneren Bohrung (270) des Gehäuses (210);
das Anschließen eines Adapters (230) am Gehäuse (210); und
das Überformen einer Verbindung (250) zwischen dem Gehäuse (210) und dem Adapter (230).

13. Verfahren nach Anspruch 12, welches weiters das Positionieren einer Feder (390) innerhalb des Gehäuses (210) zwischen der Hülse (300) und dem Adapter (230) umfasst, um die Hülse (300) vom Adapter (230) wegzudrücken.

14. Verfahren nach Anspruch 13, welches weiters umfasst, dass zugelassen wird, dass die erste Dichtung (320b) der Hülse (300) eine Abdichtung gegen die Wand der inneren Bohrung (270) im Gehäuse (210) bildet, während die Hülse (300) innerhalb des Gehäuses (210) axial bewegt wird.

## Revendications

1. Raccord (200) pour un ensemble de couplage (100), le raccord (200) comportant :
un logement (210) définissant un alésage interne (270) ;
un manchon (300) positionné dans l'alésage interne du logement (210) ;
un premier joint surmoulé (320b) formé de façon à créer un engagement d'étanchéité entre le manchon (300) et le logement (210) ; et
un deuxième joint surmoulé (320c) sur la surface intérieure du manchon (300) devant assurer l'étanchéité contre une tige (400) du raccord (200), le premier joint surmoulé (320b) et le deuxième joint surmoulé (320c) étant formés à partir d'une matière de moulage pendant un cycle unique d'un processus de moulage.

2. Raccord (200) selon la revendication 1, comportant en outre :
un troisième joint surmoulé (320a) formé de façon à créer un engagement d'étanchéité avec une surface d'un deuxième raccord correspondant (500).

3. Raccord (200) selon la revendication 2, dans lequel les premier, deuxième, et troisième joints surmoulés (320b, 320c, 320a) sont formés en utilisant un processus à cycle unique.

4. Raccord (200) selon la revendication 3, dans lequel le manchon (300) est formé dans un premier cycle d'un processus de moulage à deux cycles, et dans lequel les premier, deuxième, et troisième joints surmoulés (320b, 320c, 320a) sont formés sur le manchon (300) dans un deuxième cycle du processus à deux cycles.

5. Raccord (200) selon la revendication 1, comportant en outre un adaptateur (230), dans lequel l'adaptateur (230) est relié au logement (210) par un joint surmoulé (250).

6. Raccord (200) selon la revendication 1, dans lequel l'ensemble de couplage comprend en outre un deuxième raccord correspondant (500) comportant :
un logement (510) comprenant une première extrémité (520), une deuxième extrémité, et définissant un alésage interne (570), la première extrémité (520) définissant une surface d'étanchéité renfoncée (520b) ;
une terminaison (530) fixée sur la deuxième extrémité du logement (510) ; et
une soupape (600) positionnée dans l'alésage interne (570) du logement (510).

7. Raccord (200) selon la revendication 6, comportant en outre un joint surmoulé (550) formé afin de relier le logement (510) et la terminaison (530).

8. Procédé de formation d'un raccord (200), le procédé comportant le fait de :
mouler un manchon (300) du raccord (200), le manchon (300) définissant une surface intérieure, une surface extérieure, une première extrémité (310), et une deuxième extrémité (320) ; et
surmouler un premier joint (320b) sur la surface extérieure du manchon afin d'assurer une étanchéité contre une paroi formant un alésage interne (270) dans un logement (210) du raccord (200) ; et
surmouler un deuxième joint (320c) sur la surface intérieure du manchon (300) afin d'assurer l'étanchéité contre une tige (400) du raccord (200), le premier joint (320b) et le deuxième joint (320c) étant formés à partir d'une matière de moulage pendant un cycle unique du processus de moulage.

9. Procédé selon la revendication 8, comportant en outre le fait de surmouler un troisième joint (320a) sur la première extrémité (310) du manchon (300) afin d'assurer l'étanchéité contre une surface d'un deuxième raccord correspondant (500).

10. Procédé selon la revendication 9, comportant en outre le fait de surmouler les premier, deuxième, et troisième joints (320b, 320c, 320a) sur le manchon (300) utilisant un processus à cycle unique.

11. Procédé selon la revendication 9, comportant en outre le fait de :
former le manchon (300) dans un premier cycle d'un processus à deux cycles ; et
surmouler les premier, deuxième, et troisième joints (320b, 320c, 320a) dans un deuxième cycle du processus à deux cycles.

12. Procédé selon la revendication 8, comportant en outre le fait de :
placer le manchon (300) dans l'alésage interne (270) du logement (210) ;
relier un adaptateur (230) au logement (210) ; et
surmouler un joint (250) entre le logement (210) et l'adaptateur (230).

13. Procédé selon la revendication 12, comportant en outre le fait de positionner un ressort (390) dans le logement (210) entre le manchon (300) et l'adaptateur (230) afin de forcer le manchon (300) à l'écart de l'adaptateur (230).

14. Procédé selon la revendication 13, comportant en outre le fait de permettre au premier joint (320b) du manchon (300) de former une étanchéité contre la paroi de l'alésage interne (270) dans le logement (210) lorsque le manchon (300) est déplacé axialement dans le logement (210).
